# EUROPEAN PATENT APPLICATION

(11) **EP 4 417 035 A1**
(43) Date of publication of application: **21.08.2024**
(21) Application number: 24156557.1
(22) Date of filing: 08.02.2024
(51) Int. Cl.: A01D 46/26

(54) **ENERGY-SAVING BEATING APPARATUS**

(30) Priority: 15.02.2023 IT 202300002511
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

An energy-saving beating apparatus, comprising an elongated handle (11), provided, at a working end (12), with a supporting body (13) to which two laterally adjacent oscillating sectors (14) provided with beating rods (15) are articulated, said oscillating sectors (14) being connected to the supporting body (13) so as to allow oscillation, and being connected in a kinematic chain to motor means (16) powered by a battery (17), and further comprising:
- an inverter (18) capable of starting and regulating the speed of the motor means (16),
- at least one sensor (19), arranged adjacent to the rods (15), which is capable of determining the presence of an obstacle,
- an activation button (20), connected to a microcontroller (21), for starting and stopping the motor means (16), and,
- an electrical bus (22) for connection between the at least one sensor (19) and the microcontroller (21).

## Description

The present invention relates to an energy-saving beating apparatus.

Beating is an operation known since forever, and its purpose is to cause fruit to fall from a plant to the ground so it can be gathered.

Beating methods generally involve an operation of agitating the branches of the plant in order to cause its fruits to fall off.

Such agitation is executed with the aid of equipment which can be simple sticks or rakes, or adapted apparatuses, like modem beaters.

These, at the working end of an elongated handle, have devices equipped with rods moved by a motor.

The operator inserts the moving rods between the branches of the plant and the rods shake them, and optionally strike them, in so doing making the fruits fall off.

Nowadays beating apparatuses are known, and generally comprise an elongated handle, provided, at the working end thereof, with a supporting body to which two laterally adjacent oscillating sectors provided with beating rods are articulated, said oscillating sectors being connected to the body so as to allow oscillation by means of respective pivots, and being connected in a kinematic chain to motor means powered by a battery.

Although much appreciated nowadays, these apparatuses present some aspects that show room for improvement.

In fact, the need is felt for apparatuses that enable an efficacious shaking of the branches while simultaneously avoid as far as possible damage to those branches owing to friction or to percussion.

Furthermore, there is a general desire to save battery energy, and also to reduce the vibrations to which the arms and hands of the operator are subjected.

The aim of the present invention is to provide a beating apparatus which makes it possible to save energy during its use.

Within this aim, an object of the invention is to provide a beating apparatus that reduces the necessary force for its use.

Another object of the invention is to provide a beating apparatus that is simple and easy to use, and which can be produced at relatively low cost.

This aim and these and other objects which will become more apparent hereinafter are achieved by an energy-saving beating apparatus, comprising an elongated handle, provided, at the working end thereof, with a supporting body to which two laterally adjacent oscillating sectors provided with beating rods are articulated, said oscillating sectors being connected to said supporting body so as to allow oscillation, and being connected in a kinematic chain to motor means powered by a battery, said apparatus being characterized in that it comprises:
- an inverter, capable of starting and regulating the speed of the motor,
- at least one sensor, arranged adjacent to the rods, which is capable of determining the presence of an obstacle,
- an activation button,
- a microcontroller for starting and stopping the motor, connected to said activation button,
- an electrical bus for connection between said at least one sensor and said microcontroller.

Further characteristics and advantages of the invention will become better apparent from the detailed description that follows of a preferred, but not exclusive, embodiment of the beating apparatus according to the invention, illustrated by way of non-limiting example in the accompanying drawing wherein:

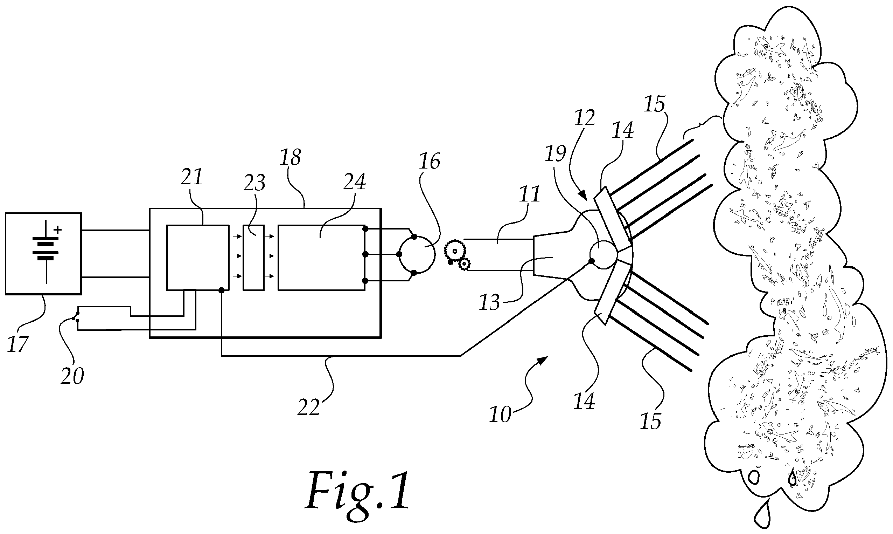

- Figure 1 is an electrical operating diagram of an apparatus according to the invention.

With reference to the figure, the reference number 10 indicates a beating apparatus according to the present invention, which comprises a handle 11, which is provided, at a working end 12, with a supporting body 13, to which two laterally adjacent oscillating sectors 14 provided with beating rods 15 are articulated.

These oscillating sectors 14 are connected, so as to be able to oscillate, to the supporting body 13 and are connected in a kinematic chain to motor means 16, for example, a brushed or brushless electric motor powered by a battery 17.

According to the invention, the apparatus comprises:
- an inverter 18 capable of starting and regulating the speed of the motor means 16,
- at least one sensor 19, arranged adjacent to the rods 15, for example on the supporting body 13 or on the oscillating sectors 14, which is capable of determining the presence of an obstacle,
- an activation button 20, connected to a microcontroller 21, for starting and stopping the motor means 16, and,
- an electrical bus 22 for connection between the at least one sensor 19 and the microcontroller 21.

The sensor 19 must be advantageously capable of effectively measuring a distance with an accuracy of approximately one centimeter and in a range substantially from 10 centimeters to one meter, with a measuring angle covering the region of action of the rods 15.

The number of sensors 19 can be varied as a function of the requirements.

Advantageously, for example, the following can be used:
- Ultrasound sensors, which are based on measuring the reflection time of ultrasound from an obstacle.

In the economic version, the transmitter and receiver are separate.
- Time-of flight (TOF) sensors.

These sensors measure the reflection time of an infrared laser light from an obstacle.

Transmitter and receiver are integrated on the same chip, and are fairly of low cost.
- Radar sensors.

These sensors measure the reflection time of microwaves from an obstacle.

Transmitter and receiver are integrated on the same chip, but are rather more expensive.

The electrical bus 22, in a per se known manner, is a communication channel that enables peripherals and components of an electronic system to interface with each other, exchanging information or data via the transmission and reception of signals.

The inverter comprises, in a per se known manner, a MOSFET Driver (23) and MOSFET bridge (24).

The microcontroller is for driving the motor means 16, but a power stage is necessary, constituted by four (for brushed motors) or six (for brushless motors) power MOSFETs (MOSFET bridge (24)) which switch the battery voltage on the phases of the motor means with a determined sequence.

The microcontroller 21 uses a stage called MOSFET Driver (23) which boosts and adapts the voltage levels.

With regards to operation, the apparatus 10, once switched on, starts with the lowest speed and, if no obstacles are detected, maintains that speed.

The microcontroller 21 continuously reads the distance between the sensor 19 and an obstacle located in front of the rods 15.

If an obstacle is detected closer than a certain distance, the microcontroller 21 varies the speed of the motor means 16, and therefore of the rods 15, in order to reach the operating speed for working.

The operating speed remains the same for as long as the distance to the obstacle is less than a certain threshold distance.

To filter changes of speed that occur too frequently, the operating speed remains the same for 1-3 seconds even after the obstacle is no longer detected, and then returns to the lowest speed.

It has thus been observed that the aim and objects of the present invention have been achieved.

In fact, the apparatus is capable of minimizing energy consumption and minimizing the vibrations on the hands and arms of the operator working with it.

Actuation at the lowest speed shows that the apparatus is in operation.

There is no physical contact with the obstacle (leaves and branches), so the motor means 16 do not encounter a certain load current that causes the motor means to increase speed.

When physical contact occurs, there is little sensitivity and calibration is difficult, since the obstacles are leaves and branches.

Furthermore, with physical contact, shaking some leaves does not result in any appreciable increase in current on the motor 16.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102023000002511 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An energy-saving beating apparatus (10), comprising an elongated handle (11), provided, at a working end (12) , with a supporting body (13) to which two laterally adjacent oscillating sectors (14) provided with beating rods (15) are articulated, said oscillating sectors (14) being connected to said supporting body (13) so as to allow oscillation and being connected in a kinematic chain to motor means (16) powered by a battery (17), said apparatus being **characterized in that** it comprises:
- an inverter (18) capable of starting and regulating the speed of said motor means (16),
- at least one sensor (19), arranged adjacent to the rods (15), which is capable of determining the presence of an obstacle,
- an activation button (20), connected to a microcontroller (21), for starting and stopping said motor means (16), and,
- an electrical bus (22) for connection between said at least one sensor (19) and said microcontroller (21).

2. The beating apparatus according to claim 1, **characterized in that** said motor means (16) are selected from a brushed or brushless electric motor.

3. The beating apparatus according to one or more of the preceding claims, **characterized in that** said sensor (19) is capable of measuring a distance with an accuracy of approximately one centimeter and in a range substantially from 10 centimeters to one meter, with a measuring angle covering the region of action of said rods (15).

4. The beating apparatus according to claim 3, **characterized in that** said at least one sensor (19) is an ultrasound sensor.

5. The beating apparatus according to claim 3, **characterized in that** said at least one sensor (19) is a time-of-flight sensor.

6. The beating apparatus, according to claim 3, **characterized in that** said at least one sensor (19) is a radar sensor.
